# EUROPEAN PATENT APPLICATION

(11) **EP 2 014 949 A1**
(43) Date of publication of application: **14.01.2009**
(21) Application number: 07742088.3
(22) Date of filing: 20.04.2007
(51) Int. Cl.: F16H 1/32, F16H 1/14, F16H 1/20

(54) **REDUCTION GEAR MECHANISM, AND ITS MANUFACTURING METHOD**

(30) Priority: 28.04.2006 JP 2006126203
(71) Applicant: Nabtesco Corporation, Tokyo 105-0022 (JP)
(72) Inventor: TAKEUCHI, Kenichi, Tsu-shi Mie 514-8533 (JP)
(74) Representative: Vossius & Partner
(86) International application number: PCT/JP2007/058653
(87) International publication number: WO 2007/125835

(57) **Abstract**

A reduction gear transmission is realized in which the total speed reduction ratio is adjusted to a desired value without making any changes to a rotation direction changing gear mechanism or a speed reduction unit.

The rotation direction changing gear mechanism comprises an input shaft and an input gear that rotates together with the input shaft, and an intermediate gear that is orthogonal to the input shaft and meshes therewith. A reduction ratio adjusting gear mechanism comprises a first spur gear that rotates together with the intermediate gear, a second spur gear that meshes with the first spur gear, and a third spur gear that meshes with the second spur gear. The speed reduction unit comprises a crankshaft that rotates together with the third spur gear and causes an eccentric cam to rotate eccentrically, an external gear that revolves orbitally while being engaged with the eccentric cam, and an internal gear that surrounds the external gear while meshing with the external gear, and that has a number of teeth differing from the number of teeth of the external gear. The reduction gear transmission is capable of changing its total speed reduction ratio by changing at least one gear out of the first spur gear, the second spur gear, or the third spur gear into another gear having a differing number of teeth.

## Description

### Technical Field

The present application claims priority to Japanese Patent Application No. 2006-126203 filed on April 28, 2006, the contents of which are hereby incorporated by reference into the present specification.
The present invention relates to a reduction gear transmission utilized in an industrial robot or a machine tool. In particular, the present invention relates to a reduction gear transmission having a mechanism that changes the direction of rotation of torque applied to an input shaft and transmits this to an intermediate shaft that extends in a direction substantially orthogonal to the input shaft, and a speed reduction unit that reduces speed utilizing an external gear that revolves orbitally within an internal gear.

### Background Art

Speed reduction units that have a large speed reducing ratio while being compact are being developed. Examples of such speed reduction units are set forth in Japanese Patent Application Publication No. S62-218087 and Japanese Patent Application Publication No. 2004-293640. This type of speed reduction unit is called an inner meshing planetary gear speed reduction mechanism, and comprises a crankshaft that causes an eccentric cam to rotate eccentrically by the rotation of the crankshaft, an external gear that revolves orbitally while being engaged with the eccentric cam, and an internal gear that surrounds the external gear while being meshed with the external gear and that has a number of teeth differing from the number of teeth of the external gear.
In the inner meshing planetary gear speed reduction mechanism, the external gear rotates when the rotation of the internal gear is restricted, and the internal gear rotates when the rotation of the external gear is restricted. The number of rotations of the external gear or the internal gear can be greatly reduced compared to the number of rotations of the crankshaft.

It is often desired that, in an industrial robot or a machine tool, a rotation shaft of a motor and an output shaft of the speed reduction unit have a substantially orthogonal relationship. In this case, an intermediate shaft is disposed in an attitude substantially orthogonal to an input shaft to which the torque of the motor is input. In an industrial robot or a machine tool, the speed reduction unit and a mechanism for changing the direction of rotation, which connects the input shaft and the intermediate shaft by a gear, are joined together. Torque can be transmitted to the intermediate shaft from the input shaft, which is disposed in a substantially orthogonal direction thereto, by meshing a pair of bevel gears or a pair of hypoid gears.
A reduction gear transmission in which a rotation direction changing gear mechanism and a speed reduction unit are joined together is set forth in Japanese Patent Application Publication No. 2004-293640.

### Disclosure of Invention

### Problem to be Solved by the Invention

In order for the reduction gear transmission, in which a rotation direction changing gear mechanism and a speed reduction unit are joined together, to realize a desired speed reduction ratio (below, the speed reduction ratio of the reduction gear transmission is also termed 'total speed reduction ratio'), the speed reduction ratio of the speed reduction unit or the speed reduction ratio of the rotation direction changing gear mechanism may be adjusted to an appropriate value.
The speed reduction ratio of the speed reduction unit can be adjusted by selecting the number of teeth of the internal gear or the external gear of the speed reduction unit. The speed reduction ratio of the rotation direction changing gear mechanism can be adjusted by selecting tooth number ratio of the pair of bevel gears or the pair of hypoid gears that constitute the rotation direction changing gear mechanism.
If the speed reduction ratio of the speed reduction unit or the speed reduction ratio of the rotation direction changing gear mechanism is adjusted, a mechanism exclusively for adjusting the speed reduction ratio is not required, and consequently the reduction gear transmission can be kept compact.

Since the reduction gear transmission can be kept compact by adjusting the speed reduction ratio of the speed reduction unit or the speed reduction ratio of the rotation direction changing gear mechanism, a method has not been adopted in which a mechanism is attached exclusively for adjusting the speed reduction ratio. However, there are also problems present in the conventional method.
In the case where the speed reduction ratio of the speed reduction unit is adjusted in order to realize a reduction gear transmission having the desired total speed reduction ratio, the number of teeth of the internal gear or the external gear is selected to have a suitable value therefor. For example, in the case where the number of teeth of the internal gear is forty and the number of teeth of the external gear is thirty-nine, a speed reduction ratio of 1/40 is obtained. A speed reduction ratio of 1/20 is obtained by having the number of teeth of the internal gear to remain at forty, and having the number of teeth of the external gear be thirty-eight. The speed reduction ratio of 1/20 can also be obtained by having the number of teeth of the internal gear be twenty, and having the number of teeth of the external gear be nineteen. However, the internal gear and the external gear are produced by complicated processing and, if internal gears and external gears are produced for each desired total speed reduction ratio, many types of internal gear and external gear must be provided, making production costs extremely high.
In the case where the speed reduction ratio of the rotation direction changing gear mechanism is adjusted in order to realize a reduction gear transmission having the desired total speed reduction ratio, the tooth number ratio of the pair of bevel gears or the pair of hypoid gears is changed. However, the diameter of the gear often changes if the number of teeth of the pair of gears is changed, and consequently, it is necessary to change the positional relationship between the input shaft and the intermediate shaft when the number of teeth is changed. Moreover, in accordance with the change in the positional relationship between the input shaft and the intermediate shaft, it is also necessary to change the shape of a pedestal housing the pair of gears.

For example, in a situation where a rotation direction changing gear mechanism having a speed reduction ratio of 1/2 has been developed and a speed reduction unit having a speed reduction ratio of 1/50 has been developed, a case might be supposed where a new need arises for a reduction gear transmission having a total speed reduction ratio of 1/150. In this case, it is necessary to newly develop a rotation direction changing gear mechanism having a speed reduction ratio of 1/3 or to newly develop a speed reduction unit having a speed reduction ratio of 1/75. In either case, extensive changes to the configuration of the reduction gear transmission are required.
The present invention sets forth a technique for realizing a reduction gear transmission in which the total speed reduction ratio can be adjusted to a desired value without making any changes to a rotation direction changing gear mechanism or a speed reduction unit.

### Means to Solve the Problem

A reduction gear transmission of the present invention comprises a rotation direction changing gear mechanism, a reduction ratio adjusting gear mechanism, and a speed reduction unit.
The rotation direction changing gear mechanism comprises a pedestal, an input shaft rotatably supported by the pedestal, and an intermediate shaft rotatably supported by the pedestal in an attitude substantially orthogonal to the input shaft. An input gear that rotates together with the input shaft is fixed to the input shaft. An intermediate gear that meshes with the input gear and rotates together with the intermediate shaft is fixed to the intermediate shaft.
The reduction ratio adjusting gear mechanism comprises a first spur gear that rotates together with the intermediate gear, a second spur gear that meshes with the first spur gear, and a third spur gear that meshes with the second spur gear. The second spur gear has a second upper spur gear, a shaft portion, and a second lower spur gear. The second upper spur gear, the shaft portion, and the second lower spur gear rotate together. The first spur gear and the second lower spur gear mesh while the second upper spur gear and the third spur gear mesh.
The speed reduction unit comprises a crankshaft that rotates together with the third spur gear and causes an eccentric cam to rotate eccentrically with rotation of the crankshaft, an external gear that revolves orbitally while being engaged with the eccentric cam, and an internal gear that surrounds the external gear while meshing with the external gear, and has a number of teeth differing from the number of teeth of the external gear.

The reduction gear transmission disclosed above is capable of changing the total speed reduction ratio, without making any change to either the rotation direction changing gear mechanism or the speed reduction unit, by changing at least one of the first spur gear, the second spur gear, and the third spur gear of the reduction ratio adjusting gear mechanism to another gear having a differing number of teeth.
Contrary to conventional knowledge, in the present invention a mechanism (i.e. the reduction ratio adjusting gear mechanism) exclusively for adjusting the speed reduction ratio is provided between the rotation direction changing gear mechanism and the speed reduction unit in the reduction gear transmission. That is, for the purpose of realizing a reduction gear transmission having a desired total speed reduction ratio, the present invention incorporates a mechanism which would be unnecessary if the speed reduction ratio of the rotation direction changing gear mechanism or the speed reduction unit had been adjusted to a suitable value into the reduction gear transmission. This technique is not favorable to the reduction gear transmission being compact, and thus is a method that has not been conventionally adopted.
Nevertheless, when the mechanism exclusively for adjusting the speed reduction ratio is utilized, in opposition to the conventional common knowledge, a reduction gear transmission in which the total speed reduction ratio is adjusted to a desired value can be realized without modifying any configuration of the rotation direction changing gear mechanism or the speed reduction unit. Of course, the speed reduction ratio of the reduction ratio adjusting gear mechanism must be adjusted to a suitable value in order to realize the desired total speed reduction ratio. However, the reduction ratio adjusting gear mechanism is a mechanism exclusively adopted for adjusting the speed reduction ratio, whose configuration is a row of spur gears; the speed reduction ratio can be easily adjusted to the desired value. Utilization of the mechanism exclusively for adjusting the speed reduction ratio in contrary to the conventional common knowledge is advantageous in that no improvements are necessary with respect to the rotation direction changing gear mechanism and the speed reduction unit, and that only the reduction ratio adjusting gear mechanism, in which the adjustment thereof being simple, needs to be adjusted. This outstanding advantage surpasses the demerits of the reduction gear transmission becoming larger in size due to the utilization of such reduction ratio adjusting gear mechanism.

It is preferred that, as the speed reduction unit of the reduction gear transmission of the present invention, a speed reduction unit provided with a carrier that rotates around an axis line of the internal gear in accordance with the rotation of the external gear, whereas the carrier rotates together with the output shaft of the reduction gear transmission.
That is, it is preferred that the speed reduction unit comprises a carrier that rotatably supports the crankshaft and rotates around the axis line of the internal gear in accordance with the rotation of the external gear. In this case, the third spur gear is configured to revolve orbitally around the second spur gear.
In speed reduction units having a rotating carrier, it is necessary for the crankshaft to revolve orbitally while rotating. In this case, a configuration is adopted in which a spur gear rotates around an axis line of the carrier by the motor torque, and a spur gear that rotates while revolving orbitally around that spur gear is fixed to the crankshaft.
Compared to the above type of speed reduction transmission, the reduction gear transmission of the present invention has only the first spur gear added thereto. It is consequently possible to adjust the total speed reduction ratio by adding a minimal number of components.

It is preferred that the reduction gear transmission is constructed with the rotation direction changing gear mechanism and the speed reduction unit being supported by the pedestal. In this case, it is preferred that the second spur gear is rotatably supported around the axis line of the carrier.
In this case, the first spur gear may be fixed to the intermediate shaft of the rotation direction changing gear mechanism, and the third spur gear may be fixed to the crankshaft of the speed reduction unit. When the second spur gear is supported by the carrier of the speed reduction unit, the reduction gear transmission may be constructed by fixing the rotation direction changing gear mechanism and the speed reduction unit to the pedestal.

It is preferred, in the reduction gear transmission of the present invention, that the external gear, the carrier, and the second spur gear each has a through hole extending along an axis line of the reduction gear transmission, whereas the through hole is formed at the respective centers.
According to this reduction gear transmission, a cable, wiring, etc. can be passed though an inner part of the through hole. Processing of the cable, wiring, etc. thereby becomes easy, and it is possible to prevent trouble therein, such as breakage of wire, etc.

The present invention presents a new method of manufacturing a reduction gear transmission that comprises a rotation direction changing gear mechanism, a reduction ratio adjusting gear mechanism, and a speed reduction unit. The method comprises steps of: assembling the rotation direction changing gear mechanism to which a first spur gear is fixed, by rotatably supporting, on a pedestal, an input shaft to which an input gear is fixed and an intermediate shaft to which an intermediate gear and the first spur gear are fixed; assembling the speed reduction unit that comprises a crankshaft that causes an eccentric cam to rotate eccentrically with its rotation, an external gear that revolves orbitally while being engaged with the eccentric cam, an internal gear that surrounds the external gear while meshing with the external gear and having a number of teeth differing from the number of teeth of the external gear, a carrier that rotatably supports the crankshaft and rotates around an axis line of the internal gear in accordance with the rotation of the external gear, and a third spur gear fixed to the crankshaft; supporting a second spur gear on the carrier in a rotatable manner; and mounting, on the pedestal, the internal gear of the speed reduction unit in which the second spur gear and the third spur gear are arranged.

According to the above manufacturing method, the rotation direction changing gear mechanism to which the first spur gear is fixed and the speed reduction unit in which the second spur gear and the third spur gear are arranged are assembled separately, then the assembly of the reduction gear transmission is completed by fixing the aforementioned two members. The reduction gear transmission in which the total speed reduction ratio can be adjusted to a desired value can thus be assembled in a relatively simple manner. Moreover, the third spur gear may be fixed to the crankshaft during the step of assembling the speed reduction unit, or may be fixed after the speed reduction unit has been completed.

### Brief Description of the Drawings

FIG. 1 shows a reduction gear transmission of an embodiment 1.
FIG. 2A shows an input shaft unit.
FIG. 2B shows an intermediate shaft unit.
FIG. 2C shows a speed reduction unit.
FIG. 2D shows a pedestal.
FIG. 3 shows a cross-sectional view along the line III-III of FIG. 1.
FIG. 4 shows an enlarged view of an area A surrounded by the broken line in FIG. 3.

### Embodiments of the Invention

Some of the features of the embodiment will be described below.
(Feature 1) An intermediate shaft of a rotation direction changing gear mechanism and a crankshaft of a speed reduction unit may be joined via a row of spur gears.
(Feature 2) A hole larger than an intermediate gear may be formed in a part of a pedestal that houses the intermediate shaft.
(Feature 3) The outer diameter of a first spur gear may be smaller than the outer diameter of the intermediate gear.
(Feature 4) A through hole may be formed in a central part of a reduction gear transmission, and wiring, etc. can pass through the interior of this through hole.

An embodiment will be described in detail below with reference to the figures. Moreover, in the embodiment below, for the sake of clarity in the figures, a part of the hatching representing cross-sections may be omitted.

### (First Embodiment)

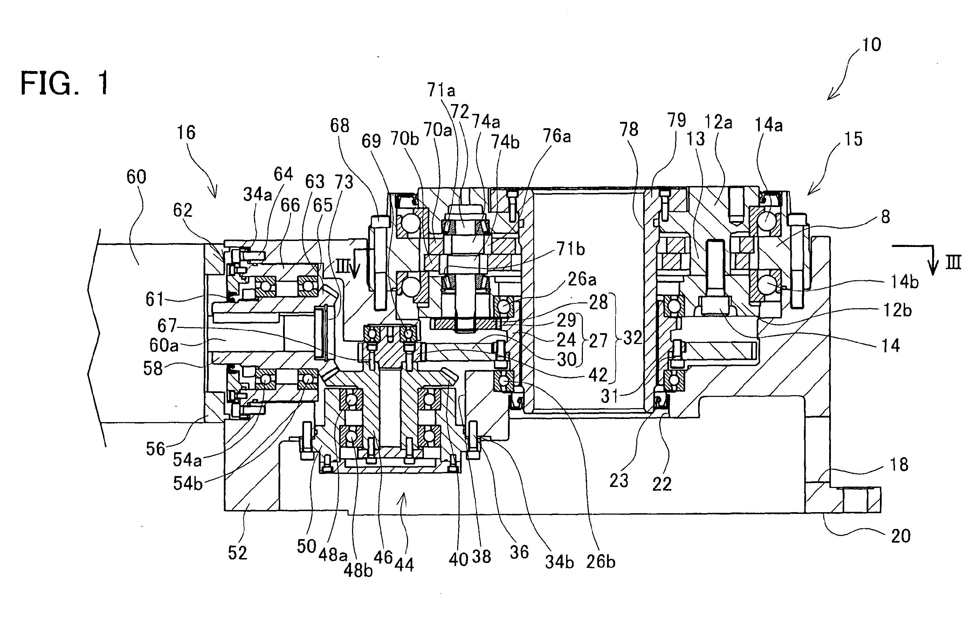

FIG. 1 shows a cross-sectional view of essential parts of a reduction gear transmission 10 of the present embodiment. The reduction gear transmission 10 comprises a rotation direction changing gear mechanism 16, a speed reduction unit 15, and a reduction ratio adjusting gear mechanism 32.

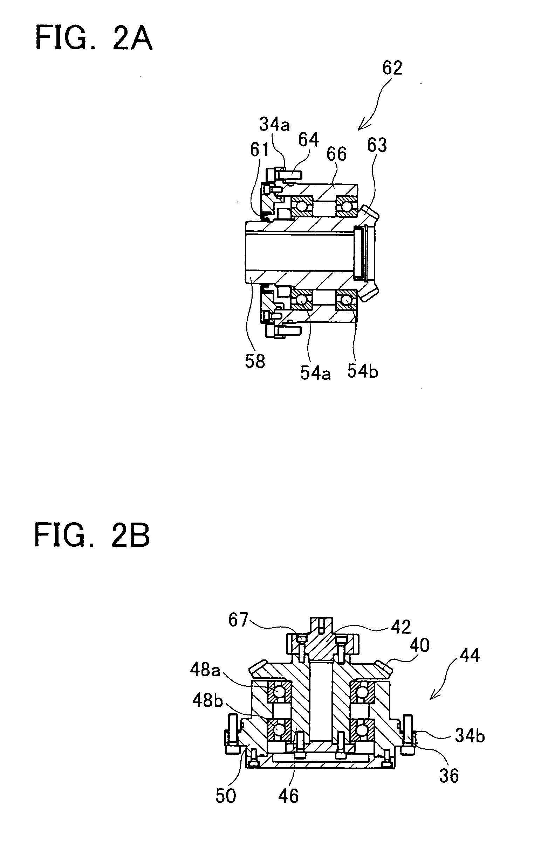

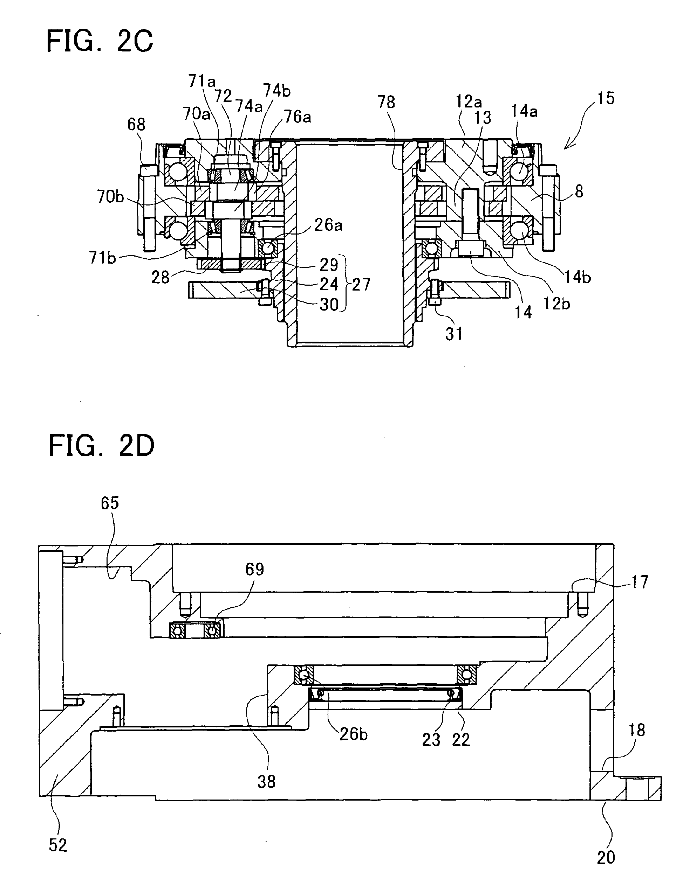

FIG. 2A shows an input shaft unit 62 prior to attachment to a pedestal 52. FIG. 2B shows an intermediate shaft unit 44 prior to attachment to the pedestal 52. FIG. 2C shows the speed reduction unit 15 prior to attachment to the pedestal 52. FIG. 2D shows the pedestal 52. A first spur gear 42 of the reduction ratio adjusting gear mechanism 32 is fixed to an intermediate shaft 46 of the intermediate shaft unit 44. A shaft portion 24 of a second spur gear 27 of the reduction ratio adjusting gear mechanism 32 is rotatably supported, by a bearing 26a, on a carrier 12b of the speed reduction unit 15. A third spur gear 28 of the reduction ratio adjusting gear mechanism 32 is fixed to a crankshaft 72 of the speed reduction unit 15. When the input shaft unit 62 and the intermediate shaft unit 44 are fixed to the pedestal 52, the rotation direction changing gear mechanism 16 having the first spur gear 42 fixed thereto is completed. When the speed reduction unit 15 having the second spur gear 27 and the third spur gear 28 attached thereto is fixed to the pedestal 52, the reduction gear transmission 10 is completed. The reduction ratio adjusting gear mechanism 32 is completed when the intermediate shaft unit 44 and the speed reduction unit 15 are fixed to the pedestal 52. Moreover, there is no particular restriction on the order in which the input shaft unit 62, the intermediate shaft unit 44, and the speed reduction unit 15 are joined to the pedestal 52.

The first spur gear 42 is fixed to the intermediate shaft 46 by bolts 67. The second spur gear 27 has a second upper spur gear 29, the shaft portion 24, and a second lower spur gear 30 fixed to the shaft portion 24 by bolts 31. The second spur gear 27 is supported by the bearing 26a so as to be capable of rotating with respect to the carrier 12b but incapable of movement in an axis line direction of the carrier 12b. The third spur gear 28 is fixed to an end portion of the crankshaft 72.
In the present embodiment, the first spur gear 42 is fixed to the intermediate shaft unit 44, the second spur gear 27 and the third spur gear 28 are attached to the speed reduction unit 15, and then the input shaft unit 62, the intermediate shaft unit 44, and the speed reduction unit 15 are joined to the pedestal 52. However, the intermediate shaft unit 44 and the first spur gear 42 may be joined to the pedestal 52 separately. Similarly, the second spur gear 27, the third spur gear 28, and the speed reduction unit 15 may be joined to the pedestal 52 separately. What is important here is that the intermediate shaft 46 is engaged to the crankshaft 72 of the speed reduction unit 15 via the reduction ratio adjusting gear mechanism 32 consisting of the spur gears 42, 30, 29, and 28.

As shown in FIG. 2D, the followings are formed in the pedestal 52: a first hole 65 for housing the input shaft unit 62, a second hole 38 for housing the intermediate shaft unit 44, a hole 18 for leading wiring, etc. to the reduction gear transmission 10, and a hole 22 for leading wiring, etc. to the exterior of the reduction gear transmission 10. Further, the pedestal 52 comprises a bearing 69 that supports a radial load that occurs when the first spur gear 42 transmits torque, a bearing 26b supporting the second spur gear 27 such that the second spur gear 27 is capable of rotating but is incapable of movement in an axis line direction of itself, and an oil seal 23 for preventing oil from leaking from the speed reduction unit 15. Further, a first flat surface 17 for fixing the position of the speed reduction unit 15 with respect to the pedestal 52, and a second flat surface 20 for fixing the reduction gear transmission 10 to a fixing surface are formed.

The input shaft unit 62 comprises an input shaft 58, an input gear 63 that rotates integrally together with the input shaft 58, and an input shaft housing 66. A pair of angular ball bearings 54a and 54b, which support the input shaft 58 with respect to the input shaft housing 66 such that the input shaft 58 is capable of rotating but is incapable of moving in its axis line direction, are provided between the input shaft 58 and the input shaft housing 66, and are assembled in advance between the input shaft 58 and the input shaft housing 66. The input gear 63 is assembled in the input shaft unit 62 at a front end of the input shaft housing 66 in a positional relationship such that this input gear 63 is exposed from the input shaft housing 66. The diameter of the input gear 63 is smaller than the diameter of the input shaft housing 66; the input gear 63 can pass through the first hole 65 for fixing the input shaft housing 66. An oil seal 61 is inserted between the input shaft 58 and the input shaft housing 66, this preventing oil within the reduction gear transmission from flowing out. A seal cap 73 (see FIG. 1) is mounted on a hollow part at a front end of the input shaft 58, this preventing oil within the reduction gear transmission 10 from flowing out even if an output shaft 60a of a motor 60 is detached from the input shaft 58. The input shaft unit 62 is inserted into the first hole 65 from the input gear 63 side, and the input shaft unit 62 is fixed to the pedestal 52 by tightening bolts 64. The depth to which the input shaft unit 62 is inserted into the pedestal 52 can be adjusted by changing the thickness of a spacer 34a.

The intermediate shaft unit 44 comprises the intermediate shaft 46, an intermediate gear 40 that rotates integrally together with the intermediate shaft 46, and an intermediate shaft housing 50. A pair of angular ball bearings 48a and 48b, which support the intermediate shaft 46 with respect to the intermediate shaft housing 50 such that the intermediate shaft 46 is capable of rotating but is incapable of moving in its axis line direction, are provided between the intermediate shaft 46 and the intermediate shaft housing 50, and are assembled in advance between the intermediate shaft 46 and the intermediate shaft housing 50. The intermediate gear 40 is assembled in the intermediate shaft unit 44 at a front end of the intermediate shaft housing 50 in a positional relationship such that this intermediate gear 40 is exposed from the intermediate shaft housing 50.
The first spur gear 42 of the reduction ratio adjusting gear mechanism 32 is fixed to the intermediate shaft 46 by bolts 67. That is, the first spur gear 42 rotates integrally together with the intermediate gear 40. Further, the diameter of the intermediate gear 40 is smaller than the diameter of the intermediate shaft housing 50; the intermediate gear 40 can pass through the second hole 38 for fixing the intermediate shaft housing 50. The intermediate shaft unit 44 is inserted into the second hole 38 from the intermediate gear 40 side, and the intermediate shaft unit 44 is fixed to the pedestal 52 by tightening bolts 36. The depth to which the intermediate shaft unit 44 is inserted into the pedestal 52 can be adjusted by changing the thickness of a spacer 34b.
In the present embodiment, the first spur gear 42 is fixed to the intermediate shaft 46 by the bolts 67. The first spur gear 42 is supported rotatably on the pedestal 52 by the bearing 69 at the opposite side to where the intermediate shaft 46 is fixed.

When the input shaft unit 62 and the intermediate shaft unit 44 are fixed to the pedestal 52, the input gear 63 and the intermediate gear 40 mesh. The input shaft 58 and the intermediate shaft 46 are orthogonal to one another. The direction of rotation of the input shaft is converted by the input gear 63 and the intermediate gear 40 that are thereby meshing.
Since the input shaft unit 62 and the intermediate shaft unit 44 are fixed to the same pedestal 52, the positional relationship of the two can be adjusted accurately, and thus the meshing state of the input gear 63 and the intermediate gear 40 can be adjusted appropriately.

The rotation direction changing gear mechanism 16 is completed by completing the input shaft unit 62 and the intermediate shaft unit 44 separately in advance, and then fixing these to the common pedestal 52. The meshing state of the input gear 63 and the intermediate gear 40 is adjusted by changing the thickness of the spacers 34a and 34b. In the present embodiment, the rotation direction changing gear mechanism 16 and the first spur gear 42 of the reduction ratio adjusting gear mechanism 32 are completed.

The speed reduction unit 15 comprises the crankshaft 72 in which eccentric cams 74a and 74b are formed, external gears 70a and 70b that engage with the eccentric cams 74a and 74b and revolve orbitally around the crankshaft 72 in accordance with the rotation of the crankshaft 72, and internal pins that surround the external gears 70a and 70b and mesh with external teeth of the external gears 70a and 70b. The number of teeth of the internal pins differs from the number of teeth of the external teeth of the respective external gears 70a and 70b.
The third spur gear 28 is fixed to the crankshaft 72 and rotates integrally together with the crankshaft 72. Further, the crankshaft 72 is supported on carriers 12a and 12b by a pair of tapered roller bearings 71 a and 71b so as to be capable of rotating but incapable of moving in its axis line direction. When the crankshaft 72 rotates, the eccentric cams 74a and 74b rotate eccentrically. When the eccentric cams 74a and 74b rotate eccentrically, the external gears 70a and 70b revolve orbitally around the crankshaft 72.
The carriers 12a and 12b are disposed so as to have the external gears 70a and 70b gripped therebetween, and are fixed by bolts 14. The carriers 12a and 12b are supported on an internal gear 8 by a pair of angular ball bearings 14a and 14b so as to be capable of rotating but incapable of moving in their respective axis line directions. A column portion 13 of the carrier 12a passes through through holes formed in the external gears 70a and 70b. The carriers 12a and 12b are not capable of rotating with respect to the external gears 70a and 70b, and the carriers 12a and 12b also rotate when the external gears 70a and 70b rotate.

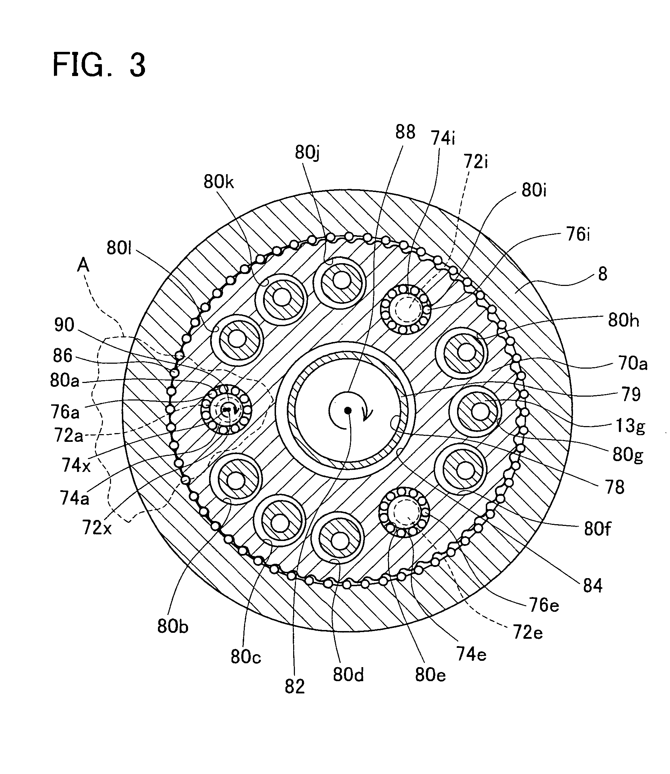

FIG. 3 shows a cross-sectional view along the line III-III of FIG. 1. As shown in FIG. 3, a total of twelve through holes 80a to 801 are formed in a circumferential direction in the external gear 70a.
Nine column portions 13b to 13d, 13f to 13h, and 13j to 131 are formed in the carrier 12a (in order to simplify the figure, reference numbers of the column portions other than 13g have been omitted from the figure). The nine column portions are inserted into the corresponding through holes 80b to 80d, 80f to 80h, and 80j to 801 of the external gear 70a.

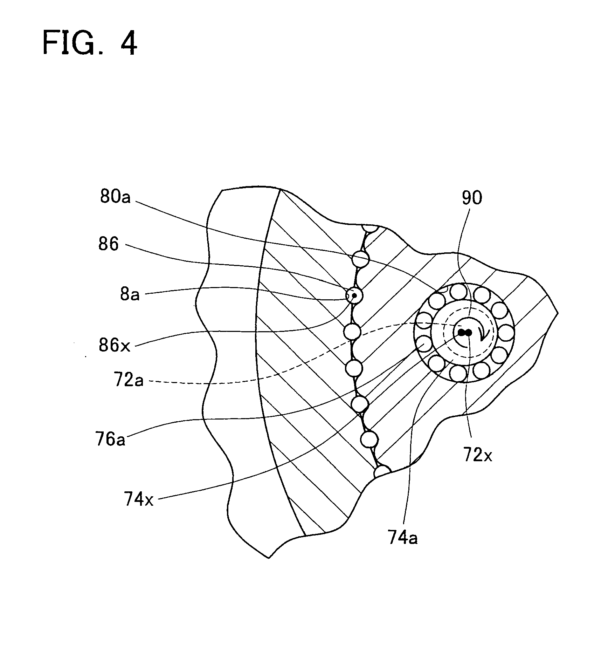

FIG. 4 shows an enlarged view of an area A surrounded by the broken line in FIG. 3. Reference number 74a in the figure shows the eccentric cam disposed in the crankshaft 72a. The outer shape of the eccentric cam 74a is round, and the center 74x of the eccentric cam 74a is offset from the axis line 72x of the crankshaft 72a. The eccentric cam 74a engages with the through hole 80a of the external gear 70a via a needle shaft bearing 76a. When the crankshaft 72a rotates around the axis line 72x, the center 74x of the eccentric cam 74a revolves orbitall^{y} around the axis line 72x of the crankshaft 72a as shown by the arrow 90. Since the external gear 70a is engaged with the eccentric cam 74a, the external gear 70a revolves orbitally around the axis line 72x of the crankshaft 72a when this crankshaft 72a rotates around its axis line 72x. Further, when the center 74x of the eccentric cam 74a revolves orbitally as shown by the arrow 90, the external gear 70a revolves orbitally around the axis line 82 of the internal gear 8 as shown by the arrow 88 (see FIG. 3). The orbital revolution radius of the arrows 90 and 88 are shown as larger than they are in reality, and the actual orbital revolution radius are identical to the offset distance between the center 74x of the eccentric cam 74a and the center 72x of the crankshaft 72a.
Reference numbers 74e and 74i shown in FIG. 3 refer to eccentric cams, and since the operation and effects thereof are the same as those of the eccentric cam 74a, an explanation thereof is omitted.

The number of external teeth of the external gear 70a is one less than the number of teeth of the internal pin. A space between the respective through holes 80b to 80d, 80f to 80h, and 80j to 801 of the external gear 70a and the corresponding column portions 13b to 13d, 13f to 13h, and 13j to 131 of the carrier 12a is a space sufficient to allow the orbital revolution 88 of the external gear 70a.
When the certain external teeth in the circumferential direction of the external gear 70a is in a meshed state with the certain internal pin 86 in the circumferential direction of the internal gear 8, the external gear 70a is capable of orbital revolution around the axis line 82 of the internal gear 8 as shown by the arrow 88. The internal pin 86 is not fixed to the internal gear 8, but is disposed in a groove 8a (see FIG. 4) formed in the internal gear 8 and is capable of rotating around a center 86x of the internal pin 86. The relationship between the internal pin 86 and the internal gear 8 is the same for all 60 internal pins.
In the present embodiment, the internal gear 8 is fixed to the pedestal 52 by bolts 68 (see FIG. 1). As a result, when the crankshaft 72a rotates, the external gear 70a rotates while revolving orbitally around the axis line 82. When the external gear 70a rotates, the carriers 12a and 12b also rotate in accordance with the rotation of the external gear 70a. Since the number of teeth of the external gear 70a is fifty-nine and the number of teeth of the internal gear 8 is sixty, the external gear 70a makes one rotation for 60 orbital revolutions of the external gear 70a. That is, the external gear 70a makes one rotation for 60 rotations of the crankshaft 72a.
A through hole 84 is formed in a central part of the external gear 70a, and a cylindrical body 79 passes through the interior of the through hole 84. A through hole 78 is formed in the cylindrical body 79, and cable, wiring, etc. can pass through the interior of the through hole 78.

The above description is the same for the external gear 70b, except that the direction of being offset is the opposite direction. In the state of FIG. 3 and FIG. 4, the center 74x of the eccentric cam 74a for the external gear 70a is offset from the axis line 72x of the crankshaft 72a. The center 74x of the eccentric cam 74a for the external gear 70a, and a center of an eccentric cam 74b for the external gear 70b, are always in a symmetrical position in which the axis line 72x of the crankshaft 72a is between the two. That is, in FIG. 3, if the external gear 70a is offset in the left direction, then the external gear 70b is offset in the right direction, if the external gear 70a is offset in the upward direction, then the external gear 70b is offset in the downward direction, if the external gear 70a is offset in the right direction, then the external gear 70b is offset in the left direction, and if the external gear 70a is offset in the downward direction, then the external gear 70b is offset in the upward direction. That is, if the entirety of the external gear 70a, the external gear 70b, and the crankshaft 72a are observed, the external gear 70a and the external gear 70b are positioned symmetrically with respect to the axis line 72x of the crankshaft 72a, and a relationship is realized in which rotational balance is maintained.

As shown in FIG. 1, the reduction ratio adjusting gear mechanism 32 is formed between the rotation direction changing gear mechanism 16 and the speed reduction unit 15 by assembling the rotation direction changing gear mechanism 16 and the speed reduction unit 15. The reduction ratio adjusting gear mechanism 32 is capable of changing the speed of rotation of the intermediate shaft 46 of the rotation direction changing gear mechanism 16, and of transferring this to the crankshaft 72 of the speed reduction unit 15.

The method of manufacturing the reduction gear transmission 10 of the present embodiment will now be described. FIGS. 2A to 2D are cross-sectional views of essential parts of the reduction gear transmission 10 prior to assembly, showing the input shaft unit 62, the intermediate shaft unit 44, the speed reduction unit 15, and the pedestal 52. The reduction ratio adjusting gear mechanism 32 is fixed to either the intermediate shaft unit 44 or the speed reduction unit 15 in units of the gears that constitute this reduction ratio adjusting gear mechanism 32. The first spur gear 42 is fixed to the intermediate shaft unit 44. The second spur gear 27 and the third spur gear 28 are fixed to the speed reduction unit 15.

The following are formed in the pedestal 52: the first hole 65 into which the input shaft unit 62 is inserted, the second hole 38 into which the intermediate shaft unit 44 is inserted, the hole 18 through which the wiring, etc. passes into and out from the rotation direction changing gear mechanism 16, the hole 22 through which the wiring, etc. passes into and out from the speed reduction unit 15, the first flat surface 17 for fixing the position of the speed reduction unit 15, and the second flat surface 20 for fixing the reduction gear transmission 10. In the present embodiment, the followings are also formed in addition to the above configuration: the bearing 69, the bearing 26b rotatably supporting the second spur gear 27, and the oil seal 23 for preventing oil within the speed reduction unit 15 from leaking to a lower part of the reduction gear transmission 10.

The input shaft unit 62 is assembled before being attached to the pedestal 52. When the input shaft unit 62 is to be assembled, the input shaft 58 is attached by the pair of bearings 54a and 54b to the input shaft housing 66 so as to be capable of rotating but incapable of moving in an axis line direction of the input shaft 58. The oil seal 61 is formed between the input shaft 58 and the input shaft housing 66 at the opposite side to where the input gear 63 of the input shaft 58 is formed. The oil seal 61 prevents the oil within the reduction gear transmission 10 from flowing out toward the motor 60.
The intermediate shaft unit 44 is also assembled before being attached to the pedestal 52. When the intermediate shaft unit 44 is to be assembled, the intermediate shaft 46 is attached by the pair of bearings 48a and 48b to the intermediate shaft housing 50 so as to be capable of rotating but incapable of moving in an axis line direction of the intermediate shaft 46. Moreover, the first spur gear 42 of the reduction ratio adjusting gear mechanism 32 is fixed to an upper surface of the intermediate shaft 46 by the bolts 67.
The speed reduction unit 15 is also assembled before being attached to the pedestal 52. When the speed reduction unit 15 is to be assembled, pressure is applied to the carriers 12a and 12b in advance by the pair of bearings 14a and 14b so as to be capable of rotating but incapable of moving in an axis line direction of the carriers 12a and 12b with respect to the internal gear 8. Further, pressure is also applied to the crankshaft 72 in advance by the tapered roller bearings 71a and 71b so as to be capable of rotating but incapable of moving in an axis line direction of the crankshaft 72 with respect to the carriers 12a and 12b.

Next, the input shaft unit 62 is inserted into the first hole 65 of the pedestal 52, and the intermediate shaft unit 44 is inserted into the second hole 38 of the pedestal 52. The meshed state of the input gear 63 and the intermediate gear 40 is adjusted by the spacers 34a and 34b, and then the input shaft unit 62 and the intermediate shaft unit 44 are fixed to the pedestal 52. Next, a lower surface of the internal gear 8 of the speed reduction unit 15 is made to make contact with the first flat surface 17 of the rotation direction changing gear mechanism 16, thereby causing the two to have a desired positional relationship, and then the internal gear 8 is fixed to the pedestal 52 by the bolt 68. When the speed reduction unit 15 is fixed to the pedestal 52, rotational torque can be transmitted between the gears of the reduction ratio adjusting gear mechanism 32 by means of the meshing of the first spur gear 42 and the second spur gear 27.

The operation of the reduction gear transmission 10 of the present embodiment will now be described. In the reduction gear transmission 10, the second flat surface 20 formed on the pedestal 52 of the rotation direction changing gear mechanism 16 is used to fix an immovable surface of a base plate or the like. The motor 60, which is attached to a fixing pedestal 56, is fixed to the pedestal 52. When the motor 60 is fixed to the pedestal 52, the output shaft 60a of the motor 60 and a gear or the like of the input shaft 58 are joined by a joining means so as to be capable of transmitting torque.

When the output shaft 60a of the motor 60 rotates, the input shaft 58 rotates integrally together with the output shaft 60a. The rotation of the input shaft 58 is transmitted to the intermediate gear 40 that is meshing with the input gear 63. When the rotation of the input shaft 58 is transmitted to the intermediate gear 40 from the input gear 63, the direction of rotation is shifted by the input gear 63 and the intermediate gear 40. The rotation speed of the motor 60 can be changed simultaneously to the shifting of the direction of rotation by adjusting the number of teeth of the input gear 63 and the number of teeth of the intermediate gear 40.

The rotation transmitted to the intermediate gear 40 has its speed changed by the reduction ratio adjusting gear mechanism 32, and is then transmitted to the crankshafts 72a, 72e, and 72i (see FIG. 3). The crankshaft 72a rotates around the axis line 72x (see FIG. 4), causing the eccentric cams 74a and 74b (see FIG. 1) to revolve orbitally around the axis line 72x. The crankshafts 72e and 72i operate in the same manner. When the eccentric cams 74a and 74b revolve orbitally, the external gears 70a and 70b revolve orbitally around the axis line 82 as shown by the arrow 88 while in a meshed state with the internal gear 8 via the internal pins 86. In the present embodiment, the internal gear 8 is fixed to the pedestal 52 by the bolts 68. That is, the rotation of the internal gear 8 is restricted, while the rotation of the external gears 70a and 70b is permitted. When the external gears 70a and 70b revolve orbitally while in a meshed state with the internal gear 8, the external gears 70a and 70b rotate due to the external gears 70a and 70b and the internal gear 8 having a differing number of teeth, and the carriers 12a and 12b rotate around the axis line 82. That is, the carriers 12a and 12b become output portions of the torque.

The reduction gear transmission 10 of the present embodiment is capable of reducing the speed of rotation of the motor 60 and outputting this rotation. That is, the speed reduction ratio of the reduction gear transmission 10 can be changed by changing at least one gear out of the first spur gear 42, the second lower spur gear 30, the second upper spur gear 29, and the third spur gear 28, those of which being gears of the reduction ratio adjusting gear mechanism 32 disposed between the rotation direction changing gear mechanism 16 and the speed reduction unit 15, with another gear having a differing number of teeth. In this case, the number of teeth of the corresponding gear at the other side is also made to differ by having at least one of the gears have a predetermined number of teeth.
The reduction gear transmission 10 of the present embodiment is capable of changing its total speed reduction ratio by changing the speed reduction ratio of the reduction ratio adjusting gear mechanism 32 without changing the rotation direction changing gear mechanism 16 or the speed reduction unit 15.

A specific example of the present invention has been described in detail above. However, this is merely an illustration, and does not limit the scope of the claims. The specific example illustrated above includes various modifications and changes that are within the technology disclosed in the present scope of the claims.
For example, in the above embodiment, the input gear and the intermediate gear were both unitized. However, only one of the input gear or the intermediate gear may be unitized, or neither the input gear nor the intermediate gear may be unitized. The input gear and/or the intermediate gear may be attached directly to the pedestal.
Further, in the above embodiment, the carriers that rotate in accordance with the rotation of the external gears are the torque output portions. However, the internal gear may be the output portion of the torque. In that case, when a part of the carriers is fixed to the pedestal, the internal gear rotates with the external gear revolving orbitally around the axis line of the internal gear in a state where the external gear is surrounded by the internal gear.
In the above embodiment, the second flat surface of the pedestal is fixed to the immovable surface of the base plate or the like. The reduction gear transmission of the present embodiment is capable of being utilized as a welding positioner utilized in a welding robot by means of being fixed to the immovable surface of the base plate or the like. Further, the reduction gear transmission is also capable of being utilized as a rotary driving device of an industrial robot.
In addition, the technological components described in the present specification or drawings exhibit technological utility either individually or in various combinations, and are not limited to the combinations disclosed in the claims at the time of application. Furthermore, the technology illustrated in the present specification or the drawings may simultaneously achieve a plurality of objects, and has technological utility by achieving one of those objects.

## Claims

1. A reduction gear transmission comprising:
a rotation direction changing gear mechanism that comprises a pedestal, an input shaft rotatably supported by the pedestal, an input gear that rotates together with the input shaft, an intermediate shaft rotatably supported by the pedestal in an attitude substantially orthogonal to the input shaft, and an intermediate gear that rotates together with the intermediate shaft and meshes with the input gear;
a reduction ratio adjusting gear mechanism that comprises a first spur gear that rotates together with the intermediate gear, a second spur gear that meshes with the first spur gear, and a third spur gear that meshes with the second spur gear; and
a speed reduction unit that comprises a crankshaft that rotates together with the third spur gear and causes an eccentric cam to rotate eccentrically with rotation of the crankshaft, an external gear that revolves orbitally while being engaged with the eccentric cam, and an internal gear that surrounds the external gear while meshing with the external gear and that has a number of teeth differing from the number of teeth of the external gear.

2. The reduction gear transmission according to claim 1, wherein:
the speed reduction unit further comprises a carrier that rotatably supports the crankshaft and rotates around an axis line of the internal gear in accordance with the rotation of the external gear, and
the third spur gear revolves orbitally around the second spur gear.

3. The reduction gear transmission according to claim 2, wherein:
the rotation direction changing gear mechanism and the speed reduction unit are supported by the pedestal, and
the second spur gear is rotatably supported around an axis line of the carrier.

4. The reduction gear transmission according to claim 3, wherein the external gear, the carrier, and the second spur gear each has a through hole at respective centers that extends along an axis line of the reduction gear transmission.

5. A method of manufacturing a reduction gear transmission that comprises a rotation direction changing gear mechanism, a reduction ratio adjusting gear mechanism, and a speed reduction unit, the method comprising steps of:
assembling the rotation direction changing gear mechanism to which a first spur gear is fixed, by supporting, on a pedestal, an input shaft to which an input gear is fixed and an intermediate shaft to which an intermediate gear and the first spur gear are fixed;
assembling the speed reduction unit that comprises a crankshaft that causes an eccentric cam to rotate eccentrically with its rotation, an external gear that revolves orbitally while being engaged with the eccentric cam, an internal gear that surrounds the external gear while meshing with the external gear and having a number of teeth differing from the number of teeth of the external gear, a carrier that rotatably supports the crankshaft and rotates around an axis line of the internal gear in accordance with the rotation of the external gear, and a third spur gear fixed to the crankshaft;
supporting a second spur gear on the carrier in a rotatable manner; and
mounting, on the pedestal, the internal gear of the speed reduction unit in which the second spur gear and the third spur gear are arranged.
